# EUROPÄISCHE PATENTSCHRIFT

(11) **EP 1 851 103 B1**
(45) Veröffentlichungstag und Bekanntmachung des Hinweises auf die Patenterteilung: **08.04.2009**
(21) Anmeldenummer: 06701877.0
(22) Anmeldetag: 01.02.2006
(51) Int. Cl.: B62D 29/00, B62D 25/14

(54) **MODULTRÄGER FÜR EIN KRAFTFAHRZEUG**
MODULE SUPPORT FOR A MOTOR VEHICLE
PORTE-MODULE POUR UN VEHICULE AUTOMOBILE

(30) Priorität: 25.02.2005 DE 202005003080 U
(43) Veröffentlichungstag der Anmeldung: 07.11.2007
(73) Patentinhaber: Magna Automotive Services GmbH, 63877 Sailauf (DE)
(72) Erfinder: SCHLEICHERT, Edward, 85764 Oberschleissheim (DE); SCHIMANSKI, Tilo, 84034 Landshut (DE)
(74) Vertreter: Grünecker, Kinkeldey, Stockmair & Schwanhäusser Anwaltssozietät
(86) Internationale Anmeldenummer: PCT/EP2006/000882
(87) Internationale Veröffentlichungsnummer: WO 2006/089623

(56) Entgegenhaltungen:
- EP-A- 1 350 711
- US-A1- 2001 043 835
- US-A1- 2002 153 750

## Beschreibung

Die Erfindung betrifft einen Modulträger mit den Merkmalen des Oberbegriffs des Anspruch 1. Ein solcher Modulträger ist aus der US 2002/153750 bekannt.

Ein aus der EP 1 298 035 A1 bekannter Querträger für ein Kraftfahrzeug dieser Gattung besteht aus zwei miteinander verbundenen Halbschalen. An diesem ist ein Halter mittels Schweißens oder Kleben angebracht, welcher zum Befestigen einer Lenksäule, der Pedallerie oder anderer Teile dient. Im Innern des Querträgers erstreckt sich zwischen Tunnel und A-Säule eine rohrartige Verstärkung, deren Enden mit dem Querträger verschraubt sind.

Durch die vielen einzelnen Arbeitsschritte, z.B. Schweißen, Kleben, Schrauben, ist die Herstellung eines solchen Querträgers aufwendig und teuer. Zudem erfordern diese Montageverfahren relativ große Toleranzen. Dadurch kann die Lage einzelner Bauteile zueinander deutlich schwanken, wodurch die Reproduzierbarkeit qualitativ hochwertiger Produkte deutlich erschwert wird.

Der Erfindung liegt die Aufgabe zugrunde, einen Modulträger der eingangs genannten Gattung dahingehend zu verbessern, dass eine schnelle, wenige Einzelarbeitsschritte erfordernde Fertigung bei hoher Qualität und guter Maßhaltigkeit möglich ist.

Diese Aufgabe wird erfindungsgemäß gelöst mit einem Modulträger mit den Merkmalen des Anspruches 1.

Das Angießen der Anbaukomponente erlaubt eine schnelle und somit kostengünstige Fertigung. Das Schalenelement wird vorgefertigt und dann in eine Gussform gebracht. Dann wird die Anbaukomponente mit hoher Maßhaltigkeit angegossen. Damit werden relativ enge Toleranzen erreicht, die gut reproduzierbar sind. Werden mehrere Anbaukomponenten in einem Vorgang angegossen können geringe Toleranzen der einzelnen Anbaukomponenten zueinander erreicht werden. Der Modulträger kann über die angegossenen Anbaukomponenten relativ passgenau mit anderen Fahrzeugteilen montiert werden.

In einer günstigen Ausführungsform kann wenigstens ein Schalenelement wenigstens eine Öffnung aufweisen, welche von einer Außenseite des Schalenelements zu einer Innenseite des Schalenelements mit Gussmaterial eingegossen ist. Durch die Hinterschneidungen, welche das Gussmaterial mit der Wandung des Schalenelements bildet, wird die Stabilität und Positionsgenauigkeit der Gussverbindung erhöht.

Bei einer weiteren Ausführungsform der Erfindung kann wenigstens ein Schalenelement wenigstens zwei voneinander beabstandete, über seine Oberfläche verteilte Öffnungen aufweisen, welche von einer Außenseite des Schalenelements zu einer Innenseite des Schalenelements mit Gussmaterial eingegossen sind. Dies erhöht die Stabilität der Gussverbindung zu dem Schalenelement und damit die Halterung insgesamt. Gegebenenfalls kann auch eine versteifende Wirkung der Anbaukomponente auf das Schalenelement resultieren.

Das Gussmaterial der Anbaukomponente weist auf einer Innenseite des Schalenelements mindestens einen die Wandung des Schalenelements hintergreifenden Gussfuß auf. Der Gussfuß bildet eine Hinterschneidung mit dem Schalenelement und sorgt so für Stabilität.

Vorteilhafterweise kann der Gussfuß eine Positionierstelle für ein Bauteil im Innern der Grundstruktur sein. Dies erleichtert die maßgenaue Anbringung zusätzlicher Bauteile im Innern des Modulträgers.

In einer besonders vorteilhaften Variante der Erfindung kann ein Versorgungskanal im Innern der Grundstruktur von mindestens einem Gussfuß gehalten sein. Dadurch ist der Versorgungskanal gut gelagert. Unter Umständen können zusätzliche Befestigungselemente für den Versorgungskanal ganz entfallen.

In einem günstigen Ausführungsbeispiel der Erfindung kann wenigstens eine Endöffnung der Grundstruktur von wenigstens zwei Schalenelementen gebildet werden. Die Öffnung kann durch das Formen der Schalenelemente fertigungstechnisch einfach hergestellt werden. Gegebenenfalls erleichtert dies das Anbringen von Bauteilen die sich durch die Öffnung erstrecken sollen.

Bei einer weiteren Ausführungsform der Erfindung kann die Grundstruktur wenigstens abschnittsweise über den Umfang, ringartig von Gussmaterial eingefasst sein. Das Gussmaterial kann sich dabei ringförmig über den Gesamtumfang einer etwa rohrartigen Grundstruktur erstrecken. Die Breite des Rings aus Gussmaterial ist hierbei variabel. Alternativ kann der Umfang einer etwa rohrartigen Grundstruktur auch nur bereichsweise von Gussmaterial umfasst sein. Das Gussmaterial bildet hierbei einen offenen Ring, der die Grundstruktur z.B. nur zu dreiviertel oder auch nur zur Hälfte, umgreift. Dadurch wird die Stabilität des Modulträgers erhöht.

Vorteilhafterweise kann wenigstens eine Endöffnung der Grundstruktur mit einem Deckelelement versehen sein, welches an die Grundstruktur angegossen ist. Dadurch wird in einem einzigen Arbeitsschritt eine Endöffnung der Grundstruktur verschlossen und die Stabilität des Modulträgers erhöht.

In einem günstigen Ausführungsbeispiel der Erfindung kann die Grundstruktur wenigstens eine Durchgangsöffnung aufweisen, welche von wenigstens zwei Schalenelementen gebildet ist. Dadurch wird ein weiterer Arbeitsschritt zum Erzeugen der Öffnung eingespart, da der Rand der Öffnung aus mehreren Teilbereichen besteht, welche jeweils in ein Schalenelement eingeformt sind. Beim Verbinden der einzelnen Schalenelemente kommt so die Gesamtöffnung zustande.

In einer besonders vorteilhaften Ausführungsform der Erfindung kann wenigstens ein Schalenelement einen aus der allgemeinen Teilungsebene der Grundstruktur hervorragenden Fortsatz aufweisen, welcher sich in eine Ausnehmung in einem korrespondierenden Schalenelement erstreckt. Durch diese versetzte, dreidimensionale Teilungsebene ergeben sich mehrere vorteilhafte Gestaltungsvarianten des Modulträgers im Gegensatz zu einer durchgängigen, zweidimensionalen Teilungsebene. Gegebenenfalls wird die Steifigkeit der Grundstruktur erhöht.

Die Aufgabe wird ferner gelöst durch ein Verfahren zum Herstellen eines Modulträgers für ein Kraftfahrzeug, mit einer etwa schalenartigen Grundstruktur, die aus mehreren Schalenelementen zusammengesetzt wird, und mindestens eine Anbaukomponente zum Anbau von oder an Fahrzeugteilen an mindestens einem Schalenelement, dadurch gekennzeichnet, dass die Anbaukomponente an wenigstens ein Schalenelement angegossen wird. Durch das Positionieren eines Schalenelements in einer Gussform und Angießen der Anbaukomponenten wird eine hohe Maßhaltigkeit sowie eine gute Reproduzierbarkeit erreicht. Durch die relativ geringen Toleranzen, welche sich bei dem Gießverfahren erzielen lassen, kann der Modulträger über die Anbaukomponenten relativ passgenau an andere Fahrzeugteile montiert werden. Durch das Angießen der Anbaukomponente wird ein schnelles und kostengünstiges Herstellungsvertahren erzielt. Je nach Gussverfahren können Nachbearbeitungsschritte entfallen. Zudem wird eine hohe Maßhaltigkeit und Reproduzierbarkeit erzielt.

Bei einem günstigen Ausführungsbeispiel können die Schalenelemente erst nach dem Anbringen aller Anbaukomponenten zu der Grundstruktur 1 zusammengebaut werden. Durch diese Reihenfolge der Arbeitsschritte wird die Fertigung der gesamten Grundstruktur des Modulträgers erleichtert.

Vorteilhafterweise können alle Anbaukomponenten eines Schalenelements in einem einzigen Gussvorgang erzeugt werden. Durch das gleichzeitige Herstellen aller Anbaukomponenten in einer Gussform lassen sich sehr geringe Toleranzen der einzelnen Anbaukomponenten zueinander erzielen.

In einer besonderen Ausführung kann wenigstens ein Schalenelement mit mindestens einer Öffnung versehen werden, wodurch sich Gussmaterial von einer Außenseite bis zu einer Innenseite des Schalenelements verteilt und die Wandung des Schalenelements hintergreift. Durch das Erzeugen von Hinterschnitten wird die Verbindung von dem Gussmaterial mit dem Schalenelement gesichert und so die Stabilität der Verbindung erhöht.

In einer weiteren Ausführungsform kann wenigstens ein Schalenelement mit mindestens zwei voneinander beabstandeten, über den Umfang verteilten Öffnungen versehen werden, welche durch Gussmaterial von einer Außenseite des Schalenelements zu einer Innenseite des Schalenelements eingegossen werden. Durch die Verteilung mehrerer Öffnungen auf den Schalenelement wird die Stabilität der Gussverbindung zu dem Schalenelement vergrößert, wodurch sich unter Umständen auch eine Versteifung des Schalenelements ergibt.

In einer weiteren Ausführungsform kann das Gussmaterial beim Durchfließen der Öffnungen einen Gussfuß auf der Innenseite des Schalenelements bilden. Durch diese Hinterschneidung wird die Stabilität der Gussverbindung erhöht.

Bei einem günstigen Ausführungsbeispiel der Erfindung kann vor dem endgültigen Verbinden der Schalenelemente in wenigstens ein Schalenelement ein Versorgungskanal eingesetzt werden. Dadurch wird die Anbringung des Versorgungskanals wesentlich erleichtert.

Vorteilhafterweise kann ein Versorgungskanal im Innern der Grundstruktur relativ zu mindestens einem Gussfuß positioniert werden. Dadurch wird die Montage des Versorgungskanals erleichtert, da der Gussfuß den Referenzpunkt für die Lage des Versorgungskanals bildet.

Vorteilhafterweise kann die Grundstruktur wenigstens abschnittsweise über den Umfang, ringartig mit Gussmaterial umgossen werden. Dies erhöht die Stabilität des Modulträgers.

Bei einer weiteren vorteilhaften Ausführung der Erfindung kann wenigstens eine Endöffnung der Grundstruktur mit einem Deckelelement verschlossen werden, welches an die Grundstruktur angegossen wird. Hierdurch wird in einem Arbeitsschritt sowohl ein Verschließen der Grundstruktur als auch eine Verstärkung derselben erreicht.

In einer günstigen Variante kann sich die Grundstruktur annähernd linear erstrecken. Hierdurch wird eine größere Stabilität des Modulträgers z.B. gegenüber in sich versetzten bzw. abgewinkelten Trägern erreicht.

Im Folgenden werden Ausführungsbeispiele der Erfindung anhand der folgenden Zeichnungen beschrieben. Dabei zeigen:
- Figur 1: den Modulträger eines ersten erfindungsgemäßen Ausführungsbeispiels in perspektivischer Ansicht von vorne, wobei Endöffnungen durch Deckelelemente verschlossen sind,
- Figur 2: ein oberes Schalenelement der Grundstruktur dieses Modulträgers in perspektivischer Ansicht von vorne,
- Figur 3: ein unteres Schalenelement der Grundstruktur dieses Modulträgers in perspektivischer Ansicht von vorne,
- Figur 4: ein unteres Schalenelement der Grundstruktur dieses Modulträgers mit zwei angegossenen Anbaukomponenten in perspektivischer Ansicht,
- Figur 5: eine Schnittdarstellung des Schalenelements aus Figur 4 zusammen mit dem korrespondierenden oberen Schalenelement,
- Figur 6: einen Ausschnitt eines oberen Schalenelements der Grundstruktur dieses Modulträgers mit zwei angegossenen Anbaukomponenten in perspektivischer Ansicht,
- Figur 7: einen Ausschnitt eines unteren Schalenelements der Grundstruktur dieses Modulträgers mit einer angegossenen Anbaukomponente in perspektivischer Ansicht,
- Figur 8: eine Schnittdarstellung der in den Figuren 6 und 7 dargestellten Anbaukomponenten bei zusammengesetzten Schalenelementen mit einem Versorgungskanal im Innern der Grundstruktur,
- Figur 9: ein zweites erfindungsgemäßes Ausführungsbeispiel der Grundstruktur des Modulträgers in perspektivischer Ansicht von vorne,
- Figur 10: einen Querschnitt durch die Grundstruktur aus Figur 9 und
- Figur 11: einen mittigen Querschnitt durch die Grundstruktur aus Figur 9.

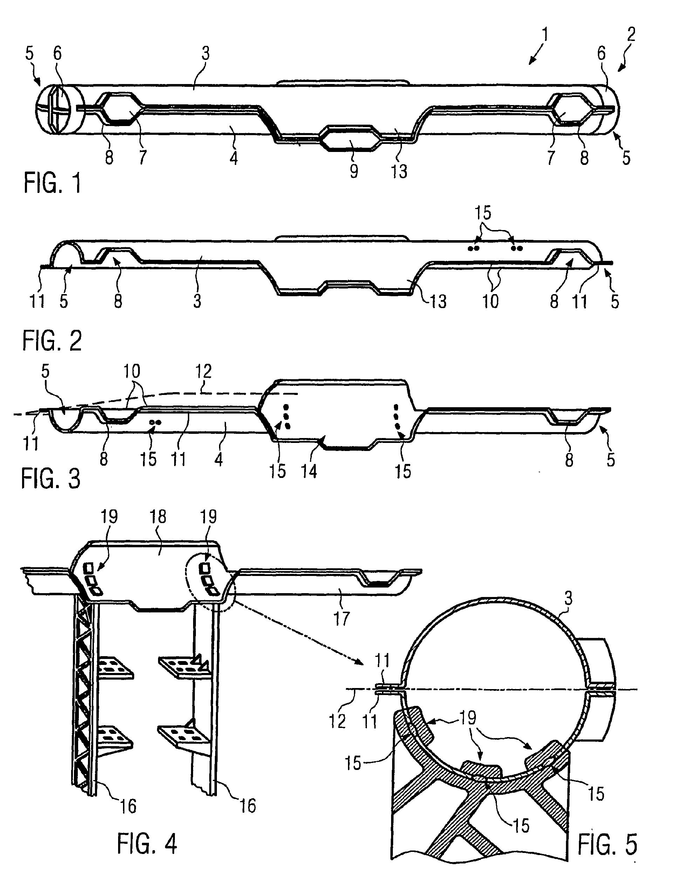

Die Figuren 1 bis 3 zeigen eine Grundstruktur 1 eines ersten Ausführungsbeispiels eines erfindungsgemäßen Modulträgers 3, welche ein oberes Schalenelement 3 und ein unteres Schalenelement 4 aufweist. Die einzelnen Schalenelemente 3 und 4 sind schalenartig geformt, also beispielsweise in sich gewölbt. Dadurch entsteht bei ihrem Zusammenfügen ein Hohlraum im Innern der Grundstruktur 1. Die Grundstruktur 1 erstreckt sich in diesem Ausführungsbeispiel annähernd linear. Das heißt, dass die Mittelachse der Grundstruktur 1 annähernd gerade verläuft, also ohne relevante abgewinkelte bzw. versetze Bereiche. Die Grundstruktur 1 erstreckt sich längs dieser Achse, wobei die Länge der Grundstruktur 1 deutlich größer als ihre Breite ist. Die Schalenelemente 3, 4 sind aus einem Metallblech, wie z.B. Aluminium- oder Magnesiumblech oder ähnlichen Werkstoffen, vorzugsweise durch Kalt- oder Warmumformen, gefertigt.

In Figur 1 sind Endöffnungen 5 der Grundstruktur 1, welche sich beim Verbinden der gewölbten Schalenelemente 3, 4 ergeben, durch Deckelelemente 6 verschlossen. Diese können z.B. als Gussteil, aber auch aus anderen Materialien wie Metallblech oder Kunststoff gefertigt sein und werden falls erforderlich, an der Grundstruktur 1 vorzugsweise durch Kleben oder Schweißen oder durch sonstige, kraft- oder formschlüssige Verbindungsverfahren befestigt. Auch Durchgangsöffnungen 7 sowie eine Öffnung 9 im mittleren, unteren Bereich der Grundstruktur 1 entstehen erst beim Zusammensetzen beider Schalenelemente 3, 4 durch das Aufeinandertreffen von vorgeformten Einformungen 8 in den einzelnen Schalenelementen.

Figur 2 zeigt das obere Schalenelement 3 der Grundstruktur 1, welches über seine gesamte Länge rohrartig gewölbt ist und an seinen beiden Längskanten 10 eine flanschartige Anformung 11 aufweist. Auch das untere Schalenelement 4, in Figur 3, ist rohrartig geformt und weist an seinen Seitenkanten 10 eine flanschartige Anformung 11 auf. Entlang der flanschartigen Anformung 11 können das obere und das untere Schalenelement 3, 4 zu einer Grundstruktur 1, wie sie in Figur 1 gezeigt ist verbunden werden, z.B. durch Schweißen. Zusätzlich wirkt die flanschartige Anformung 11 als Versteifung und erhöht somit die Festigkeit der Grundstruktur 1. Da sich die flanschartige Anformung 11 auch entlang der Einformungen 8 erstreckt, werden so auch die Durchgangsöffnungen 7 versteift.

Eine allgemeine Teilungsebene 12 der Grundstruktur 1 verläuft weitestgehend entlang der Seitenkanten 10 der rohrartig geformten Schalenelemente. Beide Schalenelemente 3, 4 weisen einen aus dieser hier etwa zweidimensionalen allgemeinen Teilungsebene 12 hervorragenden Fortsatz 13 auf, welcher sich beim Zusammenfügen in eine Ausnehmung 14 des korrespondierenden, anderen Schalenelements erstreckt. Die Teilungsebene der Grundstruktur weist also durch diesen Fortsatz 13 einen Versatz auf und erstreckt sich somit dreidimensional. Durch die flanschartige Anformung 11, welche sich auch entlang der Seitenkanten des Fortsatzes 13 erstreckt, wird auch hier eine Versteifung der Grundstruktur 1 erreicht. Dies schließt auch die Öffnung 9 ein, welche erst beim Einfügen des Fortsatzes 13 in die Ausnehmung 14 entsteht.

Die Schalenelemente 3, 4 weisen zudem mehrere Öffnungen 15 auf. Die Verteilung der Öffnungen kann beliebig gewählt werden. In diesem Ausführungsbeispiel sind insgesamt sechs Öffnungen 15 zu sehen, welche beabstandet zueinander entlang der rohrartigen Grundstruktur 1, etwa parallel zu den Seitenkanten 10 angeordnet sind. Das Schalenelement 3 in Figur 2 weist auf seiner Rückseite, hier nicht dargestellte Öffnungen auf, welche den Öffnungen 15 auf seiner Vorderseite entsprechen. Zusätzlich sind sechs Öffnungen 15 in zwei Reihen zu je drei Öffnungen quer zu den Seitenkanten 10 angeordnet.

Figur 4 zeigt das untere Schalenelement 4 der Grundstruktur 1 mit zwei angegossenen Anbaukomponenten 16. Die in den Figuren 1 bis 3 verwendeten Bezugszeichen bezeichnen dieselben Teile wie in Figur 4, so dass diesbezüglich auf die Beschreibung der Figuren 1 bis 3 verwiesen wird. Durch die Öffnungen 15 in dem Schalenelement 4 kann beim Angießen Gussmaterial von der Außenseite 17 durch die Öffnungen 15 auf die Innenseite 18 des Schalenelements 4 dringen und dort einen bzw. mehrere Gussfüße 19 bilden. Durch diese Hinterschneidung wird die Verbindung zwischen den Anbaukomponenten 16 und dem Schalenelement 4 verstärkt.

Die angegossenen Anbaukomponenten 16, welche vorzugsweise aus einem Aluminium- oder Magnesiumgusswerkstoff gefertigt sind, dienen als Halterungen z.B. wie hier für Komponenten der Mittelkonsole. Die Anbaukomponenten 16 können jedoch beliebig geformt und an jeder beliebigen Stelle der Grundstruktur 1 vorgesehen sein. Sie dienen dann z.B. als Halterungen für die Instrumententafel und weitere Komponenten wie z.B. Tunnelstützen oder Frequenzstreben. Der Modulträger 2 kann dann z.B. die beiden A-Säulen eines Automobils miteinander verbinden.

Figur 5 zeigt einen Schnitt durch das Schalenelement und eine der angegossenen Anbaukomponenten 16 aus Figur 4. Die in den Figuren 1 bis 4 verwendeten Bezugszeichen bezeichnen dieselben Teile wie in Figur 5, so dass diesbezüglich auf die Beschreibung der Figuren 1 bis 4 verwiesen wird. Im Schnitt ist die Anpassung des Gussmaterials an die Außenseite 17 des Schalenelements 4 zu sehen. Die Öffnungen 15 sind von dem Gussmaterial durchdrungen, welches auf der Innenseite 18 des Schalenelements 4 Gussfüße 19 bildet. Die Hinterschneidung, welche das Gussmaterial mit dem Schalenelement 4 bildet, sichert und verstärkt die Verbindung zwischen dem Schalenelement 4 und der Ausbaukomponente 16.

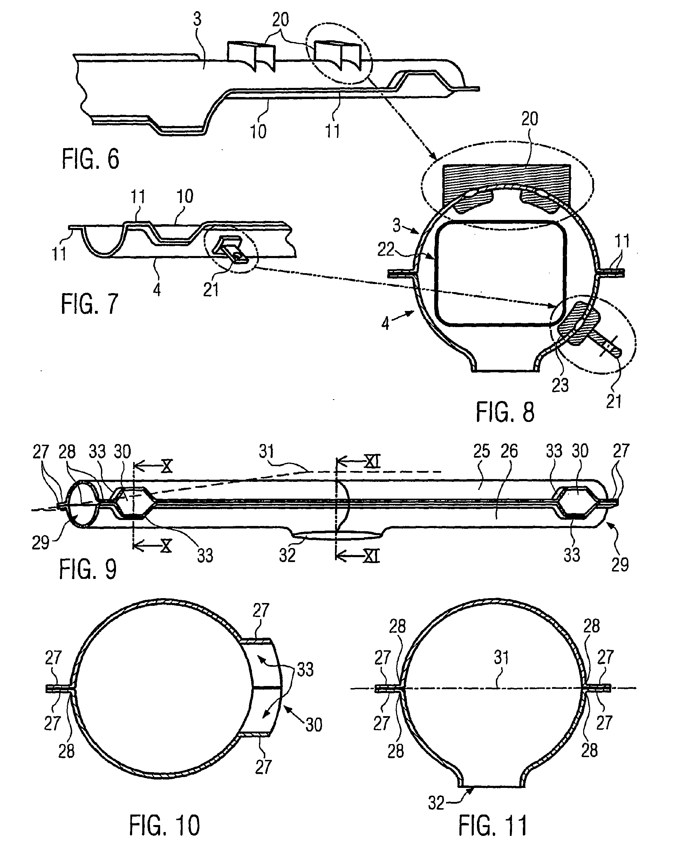

Die Figuren 6 bis 8 zeigen weitere angegossene Anbaukomponenten 20, 21 an den Schalenelementen 3, 4 in perspektivischer Darstellung sowie in Schnittdarstellung. Die in den Figuren 1 bis 5 verwendeten Bezugszeichen bezeichnen dieselben Teile wie in den Figuren 6 bis 8, so dass diesbezüglich auf die Beschreibung der Figuren 1 bis 5 verwiesen wird. Figur 6 zeigt das obere Schalenelement 3 mit zwei weiteren angegossenen Anbaukomponenten 20. Figur 7 zeigt das untere Schalenelement 4 mit einer einzelnen, weiteren angegossenen Anbaukomponente 21. Beim Angießen schmiegt sich das Gussmaterial der Anbaukomponenten 20 und 21 an die Außenkontur des jeweiligen Schalenelements 3 bzw. 4. Das Gussmaterial kann dabei den Umfang des Schalenelements mehr oder weniger weit umgreifen. Durch die Verankerung der Anbaukomponente mit dem Schalenelement über Gussfüße, kann diese Anlagefläche klein gehalten werden. So kann z.B. auch eine Anbaukomponente 21 mit Hilfe eines Gussfußes 23 verankert werden. Hierdurch lässt sich Gussmaterial einsparen, wodurch auch das Gesamtgewicht des Modulträgers reduziert wird.

Figur 8 zeigt die Schalenelemente aus Figur 6 und 7 in zusammengefügten Zustand und

im Schnitt. Die Schnittebene ist dabei durch eine der Anbaukomponenten 20 sowie durch die Anbaukomponente 21 gelegt. Im Schnitt ist auch ein Versorgungskanal 22 zu sehen, welcher vorzugsweise vor dem Zusammenbau der Schalenelemente in ein Schalenelement eingebracht wird. Der Versorgungskanal, welcher als Blasformteil oder als Schaumformteil gefertigt ist, kann jedoch auch erst nach dem Zusammenfügen der Schalenelemente 3, 4 zu der Grundstruktur 1 in diese eingebracht werden. Zum Positionieren des Versorgungskanals 22 dient in diesem Ausführungsbeispiel der Gussfuß 23 der Anbaukomponente 21. Vorteilhafterweise kann der Versorgungskanal 22 auch durch mehrere Gussfüße im Innern der Grundstruktur 1 gehalten werden, so dass eine sehr gute Positionierung und Festlegung des Versorgungskanals 22 erfolgt, wodurch unter Umständen zusätzliche Befestigungselemente für den Versorgungskanal 22 entfallen können. Alternativ kann statt des Versorgungskanals 22 auch lediglich eine Umlenkeinrichtung wie z.B. ein Umlenkblech in der Grundstruktur 1 vorgesehen sein. Dies bietet sich z.B. bei einer Luftführung durch die Grundstruktur 1 an.

Die Figuren 9 bis 11 zeigen ein zweites Ausführungsbeispiel der Erfindung, bei welchem die Grundstruktur 1 des Modulträgers 2 ebenfalls aus zwei Schalenelementen gebildet wird. Auch in diesem Ausführungsbeispiel bestehen die Schalenelemente 25, 26 aus Metallblech, vorzugsweise Aluminium- oder Magnesiumblech oder einem ähnlichen Werkstoff und werden vorzugsweise durch Kalt- oder Warmumformung gefertigt. Das obere Schalenelement 25 wird mit dem unteren Schalenelement 26 auch hier über flanschartige Anformungen 27 verbunden, welche sich entlang der Seitenkanten 28 der Schalenelemente 25, 26 erstrecken. Beide Schalenelemente sind zusammen rohrartig geformt und bilden analog dem ersten Ausführungsbeispiel beim Verbinden Endöffnungen 29 und Durchgangsöffnungen 30. Durch die flanschartigen Anformungen 27 wird die gesamte Grundstruktur 1 versteift.

Eine Teilungsebene 31 erstreckt sich auch hier entlang der flanschartigen Ausformungen 27, ist jedoch im Gegensatz zum ersten Ausführungsbeispiel nicht in sich versetzt, sondern rein zweidimensional ausgebildet. Dadurch fällt auch die Öffnung 32 in der Mitte der Grundstruktur 1 nicht in die Teilungsebene 31, sondern muss bei der Fertigung im unteren Schalenelement 26 vorgesehen werden.

Figur 10 zeigt einen Schnitt der Grundstruktur 1 aus Figur 9 durch eine der Durchgangsöffnungen 30. Die Durchgangsöffnungen 30 entstehen beim Zusammenfügen der beiden Schalenelemente 25, 26 durch das Aufeinandertreffen von Einformungen 33 in dem oberen und dem unteren Schalenelement 3, 4. Durch die flanschartigen Anformungen 27, welche sich auch entlang der Einformungen 33 erstrecken, werden die Durchgangsöffnungen 30 versteift.

Figur 11 zeigt einen mittigen Schnitt durch die rohrartige Grundstruktur 1 des Modulträgers 2 aus Figur 9. Da die Teilungsebene 31 in diesem Ausführungsbeispiel rein zweidimensional verläuft, ist in dem unteren Schalenelement 26 eine Öffnung 32 vorgesehen, durch welche z.B. weitere Komponenten wie ein Versorgungskanal aus dem Modulträger heraus, nach unten geführt werden können.

Auch in diesem zweiten Ausführungsbeispiel können Anbaukomponenten 16 analog der Figuren 4 und 5 sowie Anbaukomponenten analog der Figuren 6 bis 8 vorgesehen sein, welche hier aus Darstellungsgründen nicht gezeigt sind. Ebenso können analoge Öffnungen 15 sowie Deckelelemente 5 auch in diesem Ausführungsbeispiel vorgesehen sein. Im Innern der Grundstruktur 1 kann auch hier analog dem ersten Ausführungsbeispiel ein Versorgungskanal und/oder eine Umlenkeinrichtung vorgesehen sein.

Im Folgenden wird ein Verfahren zum Herstellen eines Modulträgers für ein Kraftfahrzeug anhand der in den Figuren dargestellten Ausführungsbeispiele erläutert.

Ein Schalenelement 3, welches vorzugsweise aus Metallblech wie z.B. Aluminium- oder Magnesiumblech Stahl oder einem beliebigen anderen Material besteht, wird z.B. durch Kalt- oder Warmumformen gefertigt. Dadurch erhält es seine schalenartige, gewölbte Form. Außerdem werden in diesem vorausgehenden Arbeitsschritt die Öffnungen 15 und 9 bzw. 32, Einformungen 8 sowie die flanschartige Anformung 11 erzeugt. Das vorgeformte Schalenelement 3 wird dann in eine Gussform eingesetzt und durch Gießen mit Anbaukomponenten 16 versehen. Die Anbaukomponenten werden vorzugsweise aus einem Aluminium- oder Magnesiumgusswerkstoff gefertigt. Bei dem Gießverfahren, z.B. Aluminiumdruckguss, fließt das Gussmaterial durch die Öffnungen 15 von einer Außenseite 17 bis zu einer Innenseite 18 des Schalenelements 3 und bildet auf der Innenseite 18 des Schalenelements mehrere Gussfüße 19 aus, gut zu sehen in Figur 4. Dadurch wird die Stabilität der Verbindung zwischen Anbaukomponente 16 und dem Schalenelement 3 erhöht. Durch die Anpassung des Gussmaterials an die Außenseite 17 des Schalenelements 3 und die Verankerung des Gussmaterials über die Öffnungen 15 und Gussfüße 19 kann die Anbaukomponente 16 gegebenenfalls auch eine versteifende Wirkung auf das Schalenelement ausüben.

Nachdem auch das untere Schalenelement 4 auf analoge Weise gefertigt wurde, können die beiden Schalenelemente 3, 4 zusammengesetzt werden und entlang der flanschartigen Anformung 11 miteinander z. B. durch Kleben oder Schweißen zu der Grundstruktur 1 verbunden werden. Dadurch wird die Grundstruktur 1 bzw. der Modulträger 2 weiter versteift. Soll ein Versorgungskanal 22 im Innern der Grundstruktur 1 vorgesehen werden, kann dieser vor dem Verbinden der beiden Schalenelemente, in einem Schalenelement vormontiert werden. Dabei kann er relativ zu den Gussfüßen 19 positioniert werden. Der als Blas- oder Schaumformteil gefertigte Versorgungskanal 22 kann jedoch auch erst nach dem Zusammenbau der Schalenelemente 3, 4 in die Grundstruktur 1 eingefügt werden. Alternativ oder zusätzlich zu dem Versorgungskanal 22 kann im Innern der Grundstruktur 1 auch eine Umlenkeinrichtung wie z. B. ein Umlenkblech montiert werden. Dies wird vorzugsweise an einem Schalenelement 3 vor dem endgültigen Zusammenbau vormontiert.

Die Endöffnungen 5 der so entstandenen Grundstruktur 1 können, wie in Figur 1 gezeigt, durch Deckelelemente 6 verschlossen werden. Zur Sicherung dieser Deckelelemente 6 können diese mit der Grundstruktur 1 verschweißt oder verklebt werden. Dadurch wird zugleich eine Verstärkung des gesamten Modulträgers erzielt.

Um die Grundstruktur 1 noch weiter zu verstärken, kann diese auch an anderen Stellen wenigstens abschnittsweise über den gesamten Umfang ringartig mit Gussmaterial umgossen werden. Das Gussmaterial kann dabei ringförmig über den gesamten Umfang der etwa rohrartigen Grundstruktur aufgebracht werden. Die Breite dieses Gussmaterialrings ist variabel. Alternativ kann der Umfang der Grundstruktur 1 auch nur zu dreiviertel oder zur Hälfte, also halbkreisförmig umgossen werden, so dass kein vollständig geschlossener Ring aus Ausgussmaterial entsteht.

## Patentansprüche

1. Modulträger (2) für ein Kraftfahrzeug, mit einer schalenartigen Grundstruktur (1), welche mehrere Schalenelemente (3, 4) aufweist, von welchen mindestens eines mit mindestens einer Anbaukomponente (16) zum Anbauen von oder an Fahrzeugteilen vorgesehen ist, und die Anbaukomponente (16) an mindestens einem der Schalenelemente (3, 4) angegossen ist,
**dadurch gekennzeichnet,**
**dass** das Gussmaterial der Anbaükomponente auf einer Innenseite des Schalenelements (18) mindestens einen die Wandung de Schalenelements hintergreifenden Gussfuß (19) aufweist.

2. Modulträger (2) nach Anspruch 1,
**dadurch gekennzeichnet,**
**dass** wenigstens ein Schalenelement (3, 4) wenigstens eine Öffnung (15) aufweist, welche von einer Außenseite (17) des Schalenelements (3, 4) zu einer Innenseite (18) des Schalenelements (3, 4) mit Gussmaterial eingegossen ist.

3. Modulträger nach wenigstens einem der vorhergehenden Ansprüche,
**dadurch gekennzeichnet,**
**dass** wenigstens ein Schalenelement (3, 4) wenigstens zwei voneinander beabstandete, über seine Oberfläche verteilte Öffnungen (15) aufweist, welche von einer Außenseite des Schalenelements (17) zu einer Innenseite des Schalenelements (18) mit Gussmaterial eingegossen sind.

4. Modulträger (2) nach wenigstens einem der vorhergehenden Ansprüche,
**dadurch gekennzeichnet,**
**dass** der Gussfuß (19) eine Positionierstelle für ein Bauteil im Innern der Grundstruktur (1) ist.

5. Modulträger (2) nach wenigstens einem der vorhergehenden Ansprüche,
**dadurch gekennzeichnet,**
**dass** ein Versorgungskanal (22) im Innern der Grundstruktur (1) von mindestens einem Gussfuß (19) gehalten ist.

6. Modulträger (2) nach wenigstens einem der vorhergehenden Ansprüche,
**dadurch gekennzeichnet,**
**dass** wenigstens eine Endöffnung (5) der Grundstruktur (1) von wenigstens zwei Schalenelementen (3, 4) gebildet wird.

7. Modulträger (2) nach wenigstens einem der vorhergehenden Ansprüche,
**dadurch gekennzeichnet,**
**dass** die Grundstruktur (1) wenigstens abschnittsweise über den Umfang, ringartig von Gussmaterial eingefasst ist.

8. Modulträger (2) nach wenigstens einem der vorhergehenden Ansprüche,
**dadurch gekennzeichnet,**
**dass** wenigstens eine Endöffnung (5) der Grundstruktur (1) mit einem Deckelelement (6) versehen ist, welches an die Grundstruktur (1) angegossen ist.

9. Modulträger (2) nach wenigstens einem der vorhergehenden Ansprüche,
**dadurch gekennzeichnet,**
**dass** die Grundstruktur (1) wenigstens eine Durchgangsöffnung (7) aufweist, welche von wenigstens zwei Schalenelementen (3, 4) gebildet ist.

10. Modulträger (2) nach wenigstens einem der vorhergehenden Ansprüche,
**dadurch gekennzeichnet,**
**dass** wenigstens ein Schalenelement (3, 4) einen aus der allgemeinen Teilungsebene (12) der Grundstruktur (1) hervorragenden Fortsatz (13) aufweist, welcher sich in eine Ausnehmung (14) in einem korrespondierenden Schalenelement (3, 4) erstreckt.

11. Modulträger (2) nach wenigstens einem der vorhergehenden Ansprüche,
**dadurch gekennzeichnet,**
**dass** sich die Grundstruktur (1) annähernd linear erstreckt.

12. Modulträger (2) nach wenigstens einem der vorhergehenden Ansprüche,
**dadurch gekennzeichnet,**
**dass** das Gussmaterial Aluminium oder Magnesiumgusswerhstoff ist.

## Claims

1. Module support (2) for a motor vehicle, with a shell-like base structure (1) having a plurality of shell elements (3, 4), at least one of which is provided with at least one accessory component (16) for assembly of or on vehicle parts, the accessory component (16) being cast on at least one of the shell elements (3, 4), **characterized in that** the casting material of the accessory component has, on an inside of the shell element (18), at least one casting foot (19) engaging behind the wall of the shell element.

2. Module support (2) according to Claim 1,
**characterized in that** at least one shell element (3, 4) has at least one opening (15) which is filled with casting material from an outside (17) of the shell element (3, 4) to an inside (18) of the shell element (3, 4).

3. Module support according to at least one of the preceding claims, **characterized in that** at least one shell element (3, 4) has at least two openings (15) which are spaced apart from one another and are distributed over its surface and which are filled with casting material from an outside of the shell element (17) to an inside of the shell element (18).

4. Module support (2) according to at least one of the preceding claims, **characterized in that** the casting foot (19) is a positioning point for a component inside the base structure (1).

5. Module support (2) according to at least one of the preceding claims, **characterized in that** a supply duct (22) is held inside the base structure (1) by at least one casting foot (19).

6. Module support (2) according to at least one of the preceding claims, **characterized in that** at least one end opening (5) of the base structure (1) is formed by at least two shell elements (3, 4).

7. Module support (2) according to at least one of the preceding claims, **characterized in that** at least a portion of the circumference of the base structure (1) is surrounded by a casting material in a ring-like manner.

8. Module support (2) according to at least one of the preceding claims, **characterized in that** at least one end opening (5) of the base structure (1) is provided with a cover element (6) which is cast onto the base structure (1).

9. Module support (2) according to at least one of the preceding claims, **characterized in that** the base structure (1) has at least one through-opening (7) which is formed by at least two shell elements (3, 4).

10. Module support (2) according to at least one of the preceding claims, **characterized in that** at least one shell element (3, 4) has an extension (13) which projects out of the general parting plane (12) of the base structure (1) and extends into a recess (14) in a corresponding shell element (3, 4).

11. Module support (2) according to at least one of the preceding claims, **characterized in that** the base structure (1) extends approximately linearly.

12. Module support (2) according to at least one of the preceding claims, **characterized in that** the casting material is aluminum or magnesium casting material.

## Revendications

1. Porte-module (2) pour un véhicule automobile, avec une structure de base en forme de coque (1) comportant plusieurs éléments de coque (3, 4) dont l'un, au moins, est pourvu d'un élément de montage (16) à monter sur des éléments de véhicule ou pour le montage de ceux-ci, et ledit élément de montage (16) est rapporté par coulage sur l'un des éléments de coque (3, 4),
**caractérisé en ce que** le matériau de coulage de l'élément de montage présente sur un côté intérieur de l'élément de coque (18) au moins une patte de coulage (19) qui vient se fixer par derrière à la paroi de l'élément de coque.

2. Porte-module (2) selon la revendication 1,
**caractérisé en ce qu'**au moins un élément de coque (3, 4) présente au moins une ouverture (15) qui est remplie de matière de coulage, d'un côté extérieur (17) de l'élément de coque (3, 4) vers un côté intérieur (18) de l'élément de coque (3, 4).

3. Porte-module selon l'une au moins des revendications précédentes, **caractérisé en ce qu'**au moins un élément de coque (3, 4) présente, réparties sur sa surface, au moins deux ouvertures (15) espacées qui sont remplies de matière de coulage, d'un côté extérieur de l'élément de coque (17) vers un côté intérieur de l'élément de coque (18).

4. Porte-module (2) selon l'une au moins des revendications précédentes, **caractérisé en ce que** la patte de coulage (19) constitue un point de positionnement pour un élément de construction à l'intérieur de la structure de base (1).

5. Porte-module (2) selon l'une au moins des revendications précédentes, **caractérisé en ce qu'**un conduit d'alimentation (22) est maintenu à l'intérieur de la structure de base (1) grâce à au moins une patte de coulage (19).

6. Porte-module (2) selon au moins l'une des revendications précédentes, **caractérisé en ce qu'**au moins une ouverture d'extrémité (5) de la structure de base (1) est formée par au moins deux éléments de coque (3, 4).

7. Porte-module (2) selon l'une au moins des revendications précédentes, **caractérisé en ce que** la structure de base (1) est entourée au moins par endroits, sur sa circonférence, suivant une forme annulaire, de matière de coulage.

8. Porte-module (2) selon au moins l'une des revendications précédentes, **caractérisé en ce qu'**au moins une ouverture d'extrémité (5) de la structure de base (1) est pourvue d'un élément formant couvercle (6) qui est rapporté par coulage sur la structure de base (1).

9. Porte-module (2) selon l'une au moins des revendications précédentes, **caractérisé en ce que** la structure de base (1) présente au moins une ouverture de passage (7) qui est formée par au moins deux éléments de coque (3, 4).

10. Porte-module (2) selon l'une au moins des revendications précédentes, **caractérisé en ce qu'**au moins un élément de coque (3, 4) présente un prolongement (13) qui dépasse du plan de séparation général (12) de la structure de base (1) et qui s'étend dans un creux (14) prévu dans un élément de coque (3, 4) correspondant.

11. Porte-module (2) selon l'une au moins des revendications précédentes, **caractérisé en ce que** la structure de base (1) s'étend à peu près linéairement.

12. Porte-module (2) selon l'une au moins des revendications précédentes, **caractérisé en ce que** la matière coulée est constituée par de l'aluminium ou par une fonte de magnésium.
